# EUROPEAN PATENT SPECIFICATION

(11) **EP 2 148 794 B1**
(45) Date of publication and mention of the grant of the patent: **31.10.2018**
(21) Application number: 08737095.3
(22) Date of filing: 23.04.2008
(51) Int. Cl.: B60P 1/04, B60T 8/24

(54) **TILT ANGLE SENSOR AND APPARATUS**
KIPPWINKEL-SENSOR UND VORRICHTUNG DAMIT
APPAREIL ET CAPTEUR D'ANGLE D'INCLINAISON

(30) Priority: 23.04.2007 GB 0707817
(43) Date of publication of application: 03.02.2010
(73) Proprietor: Knorr-Bremse Systems for Commercial Vehicles Limited, Bristol BS16 7FE (GB)
(72) Inventor: ROSS, Colin, Bristol BS16 7FE (GB); FRY, Matthew, Bristol BS16 7FE (GB)
(74) Representative: Moore, David Simon
(86) International application number: PCT/GB2008/001440
(87) International publication number: WO 2008/129306

(56) References cited:
- DE-A1-102005 058 234
- FR-A- 2 865 168
- GB-A- 2 046 957
- US-A- 4 682 145

## Description

The invention relates to apparatus for detecting tilt in a commercial vehicle, in particular but not exclusively, for detecting tilt in a tipper.

Heavy commercial tractor/trailer vehicles having a body that raises to discharge cargo carried on the trailer are well known and commonly known as tippers. With such a tipper, as the body raises the centre of gravity moves and therefore the possibility that the trailer becomes unstable increases and accordingly there is a risk that the trailer can fall over. This problem of the trailer falling over is more likely on trailers where the length of the container which holds the load is quite long, typically longer than 8m, where the movement of the centre of gravity is obviously greater.

Guidelines have been defined by the SOE in UK which give a rating to the trailer with respect to the maximum tilt angle it can sustain before instability becomes likely and these are 5 degrees and 7 degrees depending on the type of surface that the trailer will operate during the tipping process. There have been a number of proposals for systems to provide a driver with a warning when there is the potential of trailer becoming unstable, or which interface with the tipping control to prevent the body from being lifted or continuing to be lifted beyond the maximum permitted angle. These are generally based on inclinometers and tend to be fitted by third party suppliers in the aftermarket. FR 2865168 provides an example of retrofitable system which uses an inclinometer to detect tilt angle so that when an angle exceeding a predetermined value is detected, the system automatically prevents further operation of a load container.

These standalone systems have generally increased safety and reduced the likelihood of accidents but they are not part of the standard equipment of a trailer or commercial vehicle. Such systems therefore are not widely supported and suffer from increased installation and maintenance costs and are therefore frequently not specified by trailer builders or operators.

The present invention seeks to provide apparatus for detecting tilt in a commercial vehicle, in particular which can be integrated into original equipment.

According to the invention there is provided tipper vehicle control apparatus for a tipper vehicle, having a raisable body, which raisable body is raised by means of a hydraulically driven strut, the control apparatus comprising a braking ECU having discretely programmable storage means to carry operating data for one or more auxiliary functions of the vehicle, a lateral acceleration sensor adapted to detect lateral acceleration of the vehicle body, which acceleration values are transmitted to the braking ECU, characterised in that the braking ECU is adapted to determine a tilt angle from the output of the lateral acceleration sensor such that when the tilt angle exceeds a predetermined value, the braking ECU generates a signal indicating that the predetermined value has been exceeded.

Preferably there is provided a warning system for the operator. Preferably there is a lifting control means. Preferably, a hysteresis between the tilt angle sensor and the braking ECU is provided so as to prevent rapid switching of the signal.

An exemplary embodiment of the invention will now be described in greater detail with reference to the drawings, in which:
Fig. 1 shows a schematic of a trailer with its body raised
Fig. 2 shows a typical schematic of an ECU for a commercial vehicle brake system

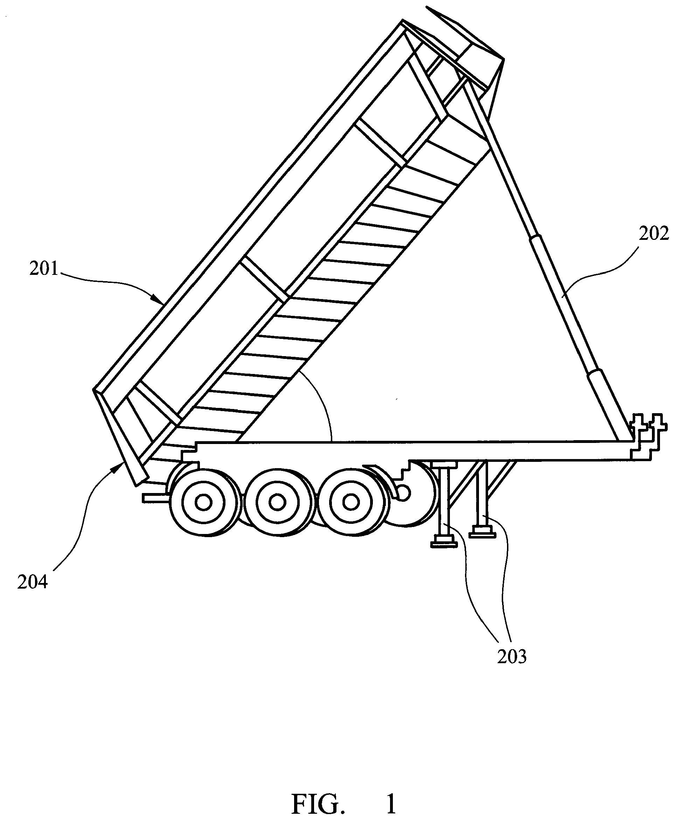

Figure 1 shows a schematic of a trailer that is provided with a raisable body 201 in the raised position, so that the trailer's cargo can be discharged through the rear of the body 204. Such trailers are commonly used for transporting building materials such as sand or aggregates and for taking waste from building sites. Tipping trucks, where the raisable body is mounted on the truck chassis, are also common. The raisable body is raised by means of a hydraulically driven strut 202, which will typically be powered from a hydraulic pump powered from a tractor's drive train.

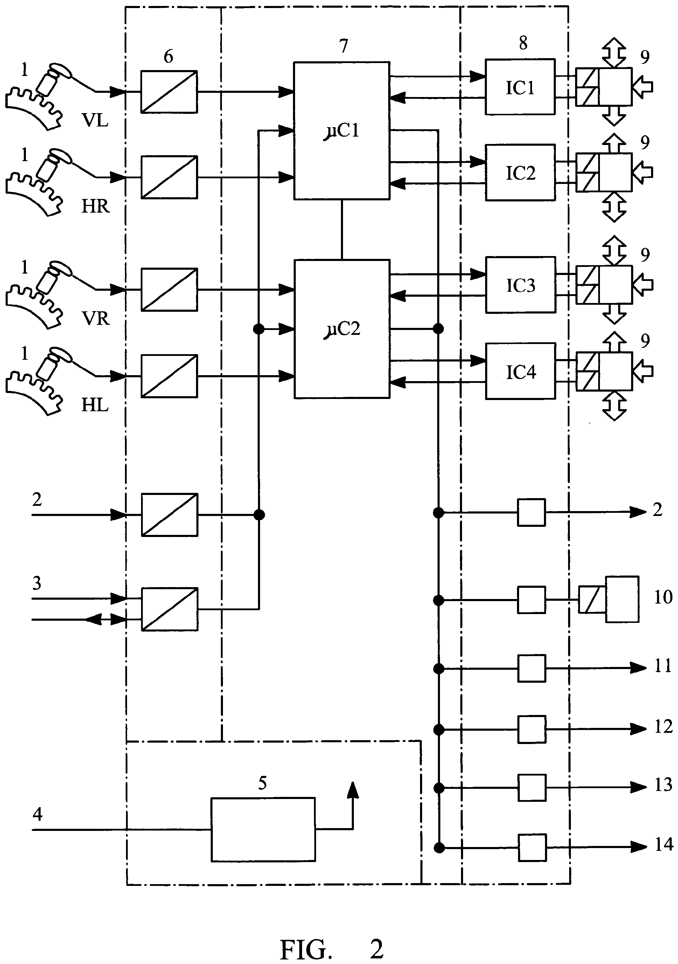

The trailer is provided with a lateral acceleration sensor described in more detail with reference to Figure 2, which is adapted to detect and measure any lateral acceleration on the trailer body. The output of the lateral acceleration sensor is passed to the trailer brake control unit.

The lateral acceleration sensor will generally be calibrated during the End of Line Test at the end of its manufacturing process, when the trailer will be on a level plane with the raisable body unraised. This calibration will generally include offset and may also continue during driving.

Figure 2 shows a schematic of an electronic control unit (ECU) for a commercial vehicle brake system. The ECU receives inputs from a variety of sensors, which include wheel speed sensors 1; one sensor may be associated with one or more wheels, pressure sensors in the brake system, a lateral acceleration sensor 2 and other auxiliary sensors. The outputs of these sensors are fed via a respective input stage 6 to one of two microcomputers 7. The microcomputers 7 comprise a RAM for volatile memory storage and an EEPROM for programmable non-volatile memory storage. The two microcomputers 7 are adapted to talk to each other for reasons of redundancy. The microcomputers 7 then communicate via output stages 8, which output stages are in turn adapted to communicate to control the pressure control valves of the brake system. The microcomputers 7 are also adapted to directly signal to a warning lamp or alarm 11.

The permitted values for these detected sensor outputs are stored in a table, which the control software for the RSP (Roll Stability Program) calls to ensure that the system is working correctly.

The microcomputer or ECU comprises an EEPROM as a non-volatile storage memory means in which the memory is divided into two blocks. The first block comprises the main safety critical control parameters in particular those related to the actuation and operation of the vehicle brakes. The second block of memory comprises a discretely programmable storage means for carrying operating data relating to one or more auxiliary functions. This separation ensure the security of safety critical functions.

When a vehicle has a dynamic vehicle control system installed such as RSP, an integral part of the trailer braking system is a lateral acceleration sensor which is primarily used to provide lateral acceleration information so that dynamic roll-overs when the vehicle is in motion can be prevented automatically by applying the trailer brakes, or the tractor brakes, or both the tractor and trailer brakes.

In the event that lateral acceleration is detected, the value of the lateral acceleration detected is transmitted to the trailer brake control module 7. When the trailer is stationary, which can be detected from either the park brake status or from the wheel speed sensors 1, any lateral acceleration will result from the trailer tilting due to the raising of the body and/or shifting of the load, as the continuing calibration will account for the trailer being parked on a slope or uneven ground. The values of the lateral acceleration in this case can be used to calibrate for the tilt angle of the trailer and so the values can determine the actual lateral tilt of the trailer. Via the diagnostic program the trailer manufacturer can program the ECU, as described below, with the maximum tilt angle that is required for the raisable body to remain safe. Using the data from the tilt angle sensor, the brake control ECU can then determine if the tilt angle determined is below or above a pre-determined maximum tilt angle. The tilt angle is defined as the angle between the body of the trailer and a level plane, a.

Once the maximum tilt angle has been exceeded an output signal will be generated by the ECU 7. The signal will continue while the tilt angle remains above the maximum tilt angle.

The lateral acceleration sensor can be adapted to detect lateral acceleration when the vehicle is stationary or moving slowly. The maximum speed will be defined as an auxiliary parameter when programming the ECU. When the vehicle is stationary or moving slowly and the vehicle body is changing position the lateral acceleration detected will be related to the increase in tilt angle. When an auxiliary output of the ECU for the braking system is configured to "Tilt Angle" the user can program the second block of the EEPROM with the vehicle and load parameters to define a safe tilt angle and maximum vehicle speed. When an unstable arrangement is reached the ECU may give a warning signal or directly interface with the drive mechanism to prevent further increase of the tilt angle.

It may be the case that the raisable body is near to the maximum tilt angle, and the body is moving. In this instance, the tilt angle sensor may generate an output that results in the output signal being turned "on" and then "off' several times in close succession, which is undesirable. This may be prevented by applying a hysteresis between the tilt angle sensor and the signal generator. This would also prevent "on/off' signals caused by small movements of the trailer platform.

## Claims

1. Tipper vehicle control apparatus for a tipper vehicle having a raisable body, which raisable body is raised by means of a hydraulically driven strut, the control apparatus comprising a braking ECU (7) having discretely programmable storage means to carry operating data for one or more auxiliary functions of the vehicle, a lateral acceleration sensor (2) adapted to detect lateral acceleration of the vehicle body when the vehicle is stationary or moving below a predefined speed, which acceleration values are transmitted to the braking ECU, **characterised in that** the braking ECU (7) is adapted to determine a tilt angle of the raiseable body from the output of the lateral acceleration sensor (2) such that when the tilt angle exceeds a predetermined value, the braking ECU generates a signal indicating that the predetermined value has been exceeded.

2. Tipper vehicle control apparatus according to claim 1, wherein there is provided a warning system for the operator.

3. Tipper vehicle control apparatus according to claims 1 or 2, wherein there is provided a lifting control means.

4. Tipper vehicle control apparatus according to any one of claims 1 to 3, wherein a hysteresis between the tilt angle sensor and the braking ECU is provided so as to prevent rapid switching of the signal.

5. Tipper vehicle control apparatus according to any one of Claims 1 to 4, wherein the vehicle is a trailer.

6. Tipper vehicle control apparatus according to any one of Claims 1 to 4, wherein the vehicle is a tipping truck.

## Patentansprüche

1. Kippfahrzeug-Steuervorrichtung für ein Kippfahrzeug mit einem anhebbaren Aufbau, welcher anhebbare Aufbau mittels einer hydraulisch angetriebenen Strebe angehoben wird, wobei die Steuervorrichtung eine Brems-ECU (7) mit einem separat programmierbaren Speichermittel zur Speicherung von Betriebsdaten für eine oder mehrere Hilfsfunktionen des Fahrzeugs umfasst, wobei ein Querbeschleunigungssensor (2) so ausgelegt ist, dass er eine Querbeschleunigung des Fahrzeugaufbaus erfasst, wenn das Fahrzeug ortsfest ist oder sich langsamer als mit einer vorgegebenen Geschwindigkeit bewegt, wobei die Beschleunigungswerte an die Brems-ECU übertragen werden, **dadurch gekennzeichnet, dass** die Brems-ECU (7) so ausgelegt ist, dass sie einen Kippwinkel des anhebbaren Aufbaus anhand der Ausgabe des Querbeschleunigungssensors (2) bestimmt, so dass, wenn der Kippwinkel einen vorgegebenen Wert überschreitet, die Brems-ECU ein Signal erzeugt, um anzuzeigen, dass der vorgegebene Wert überschritten wurde.

2. Kippfahrzeug-Steuervorrichtung nach Anspruch 1, wobei ein Warnsystem für den Bediener vorgesehen ist.

3. Kippfahrzeug-Steuervorrichtung nach Anspruch 1 oder 2, wobei ein Hubsteuerungsmittel vorgesehen ist.

4. Kippfahrzeug-Steuervorrichtung nach einem der Ansprüche 1 bis 3, wobei eine Hysterese zwischen dem Kippwinkel-Sensor und der Brems-ECU vorgesehen ist, um eine schnelle Umschaltung des Signals zu verhindern.

5. Kippfahrzeug-Steuervorrichtung nach einem der Ansprüche 1 bis 4, wobei das Fahrzeug ein Anhänger ist.

6. Kippfahrzeug-Steuervorrichtung nach einem der Ansprüche 1 bis 4, wobei das Fahrzeug ein Kipp-Lkw ist.

## Revendications

1. Appareil de commande de véhicule à benne basculante pour un véhicule à benne basculante ayant un corps pouvant être levé, lequel corps pouvant être levé est levé au moyen d'un montant entraîné par voie hydraulique, l'appareil de commande comprenant un bloc de commande électronique de freinage (7) ayant des moyens de stockage programmables de manière discrète pour acheminer des données opérationnelles pour une ou plusieurs fonctions auxiliaires du véhicule, un capteur d'accélération latérale (2) adapté à détecter une accélération latérale de la carrosserie de véhicule lorsque le véhicule est stationnaire ou se déplace en dessous d'une vitesse prédéfinie, lesquelles valeurs d'accélération sont transmises au bloc de commande électronique de freinage, **caractérisé en ce que** le bloc de commande électronique de freinage (7) est adapté à déterminer un angle d'inclinaison du corps pouvant être levé à partir de la sortie du capteur d'accélération latérale (2) de sorte que lorsque l'angle d'inclinaison dépasse une valeur prédéterminée, le bloc de commande électronique de freinage génère un signal indiquant que la valeur prédéterminée a été dépassée.

2. Appareil de commande de véhicule à benne basculante selon la revendication 1, dans lequel il est prévu un système d'avertissement pour l'opérateur.

3. Appareil de commande de véhicule à benne basculante selon la revendication 1 ou 2, dans lequel il est prévu un moyen de commande de levage.

4. Appareil de commande de véhicule à benne basculante selon l'une quelconque des revendications 1 à 3, dans lequel une hystérésis entre le capteur d'angle d'inclinaison et le bloc de commande électronique de freinage est prévue de manière à empêcher une commutation rapide du signal.

5. Appareil de commande de véhicule à benne basculante selon l'une quelconque des revendications 1 à 4, dans lequel le véhicule est une remorque.

6. Appareil de commande de véhicule à benne basculante selon l'une quelconque des revendications 1 à 4, dans lequel le véhicule est un camion-benne.
